# FASCICULE DE BREVET EUROPEEN

(11) **EP 3 559 426 B1**
(45) Date de publication et mention de la délivrance du brevet: **21.08.2024**
(21) Numéro de dépôt: 17817721.8
(22) Date de dépôt: 12.12.2017
(51) Int. Cl.: F01P 7/16, B60H 1/00, H01M 10/625

(54) **PROCÉDÉ DE PILOTAGE D'UN SYSTÈME DE REFROIDISSEMENT POUR UN VÉHICULE HYBRIDE COMPORTANT UN CIRCUIT DE TRANSFERT DE LIQUIDE DE REFROIDISSEMENT**
VERFAHREN ZUM BETRIEB EINES KÜHLSYSTEMS FÜR EIN HYBRIDES ELEKTROFAHRZEUG MIT EINEM KÜHLFLÜSSIGKEITSTRANSFERKREIS
METHOD FOR OPERATING A COOLING SYSTEM FOR A HYBRID ELECTRIC VEHICLE COMPRISING A LIQUID COOLANT TRANSFER CIRCUIT

(30) Priorité: 26.12.2016 FR 1663386
(43) Date de publication de la demande: 30.10.2019
(73) Titulaire: NEW H POWERTRAIN HOLDING, S.L.U., 47008 Valladolid (ES)
(72) Inventeur: ANDRES, Emmanuelle, 92100 Boulogne-Billancourt (FR); BEISBARDT, Olivier, 91470 Forges les Bains (FR)
(74) Mandataire: Renault Group
(86) Numéro de dépôt international: PCT/EP2017/082469
(87) Numéro de publication internationale: WO 2018/121985

(56) Documents cités:
- DE-A1- 102007 004 979
- DE-A1- 102011 118 898
- DE-A1- 102013 209 045
- DE-A1- 102015 101 186
- DE-A1- 102015 106 336
- US-B1- 6 575 258

## Description

### DOMAINE TECHNIQUE DE L'INVENTION

L'invention concerne un procédé de pilotage d'un système de refroidissement pour un véhicule hybride comportant un circuit de transfert de liquide de refroidissement.

L'invention concerne plus particulièrement un procédé de pilotage d'un système de refroidissement pour un véhicule hybride comportant au moins un moteur thermique et un moteur électrique, le système de refroidissement comportant au moins :
- un circuit de refroidissement haute température pour refroidir le moteur thermique et un circuit de refroidissement basse température pour refroidir le moteur électrique et une batterie haute tension associée, et
- un circuit de transfert de liquide de refroidissement reliant le circuit de refroidissement haute température et le circuit de refroidissement basse température et comportant des moyens de régulation pour contrôler la circulation du liquide de refroidissement dans le circuit de transfert.

### ÉTAT DE LA TECHNIQUE

On connait de US6575258-B1 un unique circuit de refroidissement pour un véhicule hybride avec différentes branches de circulation de liquide de refroidissement, cet unique circuit étant dépourvu d'un circuit basse température et d'un circuit haute température pouvant être connecté l'un à l'autre par un circuit de transfert.

On connaît de l'état de la technique comme de DE10201118898 de tels systèmes de refroidissement équipant un véhicule hybride, encore appelé « PHEV », acronyme en anglais de « *Plug-in Hybrid Electric Véhiculé ».*

D'une manière générale, on distingue différents modes de fonctionnement pour un véhicule hybride, à savoir :
- un mode électrique, aussi parfois appelé « ZEV » acronyme en anglais de « *Zero Emission Véhiculé* », dans lequel le véhicule est propulsé et/ou tracté par le moteur électrique sans intervention du moteur thermique ;
- un mode thermique dans lequel le véhicule est tracté et/ou propulsé au moyen du seul moteur thermique sans intervention du moteur électrique ;
- un mode hybride dans lequel le véhicule est tracté et/ou propulsé simultanément au moyen des moteurs thermique et électrique.

Le démarrage d'un véhicule hybride est généralement réalisé en mode électrique. Toutefois, il arrive que le démarrage en mode électrique ne puisse parfois pas être effectué en raison des conditions atmosphériques, lorsque les températures sont basses, typiquement inférieures à -20°C.

En effet, la batterie haute tension associée au moteur électrique est alors rendue inopérante si la température est inférieure à une température minimale (Tu-min) d'utilisation.

En utilisation, la batterie haute tension associée au moteur électrique ne doit pas non plus être à une température qui soit supérieure à une température maximale (Tu-max) d'utilisation, c'est l'une des raisons pour lesquelles le système de refroidissement comporte un circuit de refroidissement basse température.

De manière non limitative, les valeurs de températures minimale (Tu-min) et maximale (Tu-max) d'utilisation d'une batterie haute tension sont par exemple comprises entre 0°C et 34°C.

Toutefois, la plage de valeurs des températures minimale (Tu-min) et maximale (Tu-max) d'utilisation est susceptible de varier d'un type de batterie à un autre, notamment en fonction de la technologie et plus particulièrement des électrolytes utilisés.

La température maximale (Tu-max) d'utilisation de la batterie haute tension constitue par conséquent une première valeur de seuil de température à prendre en considération dans le pilotage du système de refroidissement et plus particulièrement celui du circuit de refroidissement basse température.

Lorsque le véhicule hybride roule en mode électrique (ZEV), le circuit de refroidissement basse température d'un système de refroidissement selon l'art antérieur est le seul circuit de refroidissement utilisé pour refroidir les organes électriques, tels que le moteur électrique et la batterie haute tension associée.

Si les sollicitations du moteur électrique sont importantes, la température du liquide de refroidissement dans le circuit de refroidissement basse température augmente alors rapidement jusqu'à se rapprocher ou atteindre une température (TFmax) limite de fonctionnement.

De manière non limitative, la valeur de la température (TFmax) limite de fonctionnement est par exemple de 60°C.

La température (TFmax) limite de fonctionnement est notamment déterminée par le moteur électrique et plus généralement par des organes de puissance, tels que des composants électroniques.

La température (TFmax) limite de fonctionnement constitue par conséquent une deuxième valeur de seuil de température à prendre en considération dans le pilotage du circuit de refroidissement basse température du système de refroidissement.

Pour estimer la température de la batterie haute tension et plus généralement déterminer si les conditions d'utilisation du mode électrique (ZEV) sont remplies, on mesure la température du liquide de refroidissement dans le circuit de refroidissement basse température, la température du liquide de refroidissement étant considérée comme représentative.

Dans la suite de la présente description, le terme « liquide de refroidissement » doit être interprété de manière large comme se référant à un fluide caloporteur susceptible d'être indifféremment utilisé pour refroidir mais également pour réchauffer en réalisant un apport de calories.

Dans ce qui suit le terme circuit de refroidissement haute température est un circuit de refroidissement dans lequel le fluide caloporteur a une température qui est supérieure à celle d'un fluide caloporteur circulant dans un autre circuit de refroidissement, alors qualifié par comparaison de circuit de refroidissement basse température.

Après un démarrage du véhicule hybride, suivi d'un roulage en mode électrique, on recherche à optimiser le refroidissement obtenu avec le circuit de refroidissement basse température.

En mode électrique, la température du liquide de refroidissement régulée en fonctionnement par le circuit de refroidissement basse température a un impact sur le rendement de l'électronique de puissance associée au moteur électrique ainsi que sur la fiabilité et la durée de vie des composants électronique et de la batterie.

On recherche donc des solutions permettant d'améliorer le refroidissement obtenu grâce au circuit de refroidissement basse température lorsque le véhicule hybride est en mode électrique.

Une solution pour améliorer le refroidissement obtenu serait de sur-dimensionner le radiateur de refroidissement que comporte le circuit de refroidissement basse température afin de limiter la montée en température du liquide de refroidissement.

Cependant, l'espace disponible à l'avant du véhicule hybride pour l'agencement du radiateur de refroidissement du circuit de refroidissement basse température est souvent limité, tout particulièrement en raison des contraintes d'implantation.

En effet, les contraintes d'implantation sont encore accrues dans le cas d'un véhicule hybride avec la présence, outre du moteur thermique, du moteur électrique, des organes de puissance et de la batterie haute tension.

Une telle solution n'est par conséquent pas satisfaisante tant pour des raisons d'encombrement que de coût.

Le but de l'invention est notamment de proposer un procédé de pilotage d'un système de refroidissement pour un véhicule hybride permettant d'améliorer, en mode électrique, le refroidissement obtenu avec le circuit de refroidissement basse température associé au moteur électrique et de la batterie haute tension.

### BREF RESUME DE L'INVENTION

Dans ce but, l'invention propose un procédé de pilotage d'un système de refroidissement pour un véhicule hybride du type décrit précédemment, caractérisé en ce que le procédé de pilotage du système de refroidissement en mode électrique comporte au moins
- une étape « E0 » d'initialisation consistant à vérifier des paramètres de fonctionnement liés au roulage en mode électrique, tels que la charge de la batterie (18) haute tension ou encore que la température de la batterie (18) est supérieure à la température minimale (Tu-min) d'utilisation, l'étape « E0 » d'initialisation étant notamment mise en oeuvre lors d'un démarrage du véhicule hybride,
- une étape « E1 » consistant à déterminer si le liquide de refroidissement présent dans le circuit de refroidissement haute température est à une température inférieure ou supérieure à une température limite de fonctionnement du circuit de refroidissement basse température ; et

- lorsque la température du liquide de refroidissement dans le circuit (100) de refroidissement haute température est inférieure à la température (TFmax) limite de fonctionnement du circuit (200) de refroidissement basse température, une étape « E2 » consistant à commander les moyens de régulation du circuit de transfert en position ouverte.

Le procédé de pilotage du système de refroidissement selon l'invention est mis en oeuvre en mode électrique, en particulier lors d'un démarrage à froid du véhicule hybride.

Avantageusement, la mise en communication sélective du circuit de refroidissement basse température avec le circuit de refroidissement haute température au travers du circuit de transfert permet d'améliorer, en mode électrique, le refroidissement de la batterie haute tension et des organes de puissance du moteur électrique.

Grâce à l'invention, on limite la montée en température du liquide de refroidissement circulant dans le circuit de refroidissement basse température et par conséquent on abaisse en mode électrique la température de fonctionnement de la batterie haute tension, du moteur électrique et des organes de puissance.

L'invention exploite avantageusement l'inertie thermique du liquide de refroidissement présent initialement dans le circuit de refroidissement haute température lorsque ledit liquide de refroidissement présente une température inférieure à la température (TFmax) limite de fonctionnement.

Le circuit de transfert permet d'utiliser sélectivement, en mode électrique, l'ensemble du liquide de refroidissement présent dans le système de refroidissement du véhicule hydride, soit celui présent dans le circuit de refroidissement basse température et également dans le circuit de refroidissement haute température.

Avantageusement, le refroidissement en mode électrique est encore amélioré en commandant sélectivement des moyens de régulation tels qu'un thermostat pour utiliser le radiateur de refroidissement du circuit de refroidissement haute température.

Le procédé de pilotage selon l'invention, en améliorant le refroidissement en mode électrique, permet en outre de limiter la montée en température du liquide de refroidissement.

En améliorant le refroidissement en mode électrique, le procédé de pilotage permet de maintenir une température de fonctionnement qui est inférieure à celle obtenue auparavant avec le seul circuit de refroidissement basse température.

L'abaissement de la température de fonctionnement résultant de l'amélioration du refroidissement, par exemple à une température de fonctionnement de l'ordre de 40°C, améliore avantageusement le rendement de l'électronique de puissance et du moteur électrique ainsi que la fiabilité et la durée de vie des composants électroniques et de la batterie.

Conformément aux enseignements de l'invention, un transfert de calories s'opère du circuit de refroidissement basse température vers le circuit de refroidissement haute température par l'intermédiaire du liquide de refroidissement qui est mis en circulation par l'intermédiaire du circuit de transfert.

De plus, l'invention procure également des avantages au-delà du fonctionnement en mode électrique.

En effet, le transfert de calories s'opérant lors du refroidissement en mode électrique a pour conséquence d'augmenter la température du liquide de refroidissement présent dans le circuit de refroidissement haute température.

La température du liquide de refroidissement présent dans le circuit de refroidissement haute température augmente d'une valeur initiale correspondant par exemple à la température ambiante dans le cas d'un démarrage pour atteindre une température finale supérieure, passant par exemple de 20°C à une température comprise entre 40°C et 60°C.

Avantageusement, lorsque le mode de fonctionnement passe ensuite du mode électrique à l'un des autres modes de fonctionnement, thermique ou hybride, la température du liquide de refroidissement ainsi réchauffé permet de réduire la durée nécessaire pour atteindre une température optimale de fonctionnement du moteur thermique.

Grâce à l'invention, on réduit donc également la phase de montée en température du moteur thermique (encore appelée « *warm up* ») au bénéfice d'une réduction de la pollution, en particulier une baisse des émissions de particules polluantes émises lors du démarrage du moteur thermique, tel qu'un moteur à essence équipé d'une injection de type indirecte.

### Selon d'autres caractéristiques de l'invention :

- si la température du liquide de refroidissement dans le circuit de refroidissement haute température est au moins égale (ou supérieure) à la température limite de fonctionnement du circuit de refroidissement basse température, le procédé de pilotage comporte une étape « E20 » consistant à commander ou maintenir les moyens de régulation du circuit de transfert en position fermée ;
- le procédé de pilotage comporte une étape « E3 » consistant à déterminer si la température du liquide de refroidissement circulant dans le circuit de refroidissement basse température est inférieure à la température maximale d'utilisation de la batterie haute tension ;
- si la température du liquide de refroidissement circulant dans le circuit de refroidissement basse température est supérieure à la température maximale d'utilisation de la batterie haute tension, le procédé de pilotage comporte une étape « E4 » consistant à commander au moins la fermeture d'une vanne de régulation de manière à interrompre la circulation du liquide de refroidissement dans une conduite du circuit de refroidissement basse température comportant la batterie haute tension ;
- lorsque la température du liquide de refroidissement circulant dans le circuit de refroidissement basse température est inférieure à la température maximale d'utilisation de la batterie haute tension, ladite étape « E3 » de vérification est répétée ;
- l'étape « E4 » du procédé de pilotage consiste à commander une pompe électrique pour faire circuler le liquide de refroidissement dans une conduite du circuit de refroidissement basse température comportant au moins un refroidisseur ;
- le procédé de pilotage comporte une étape « E5 » consistant à déterminer si la température du liquide de refroidissement circulant dans le circuit de refroidissement basse température est inférieure à la température limite de fonctionnement ;
- si la température du liquide de refroidissement circulant dans le circuit de refroidissement basse température est supérieure à une température de consigne qui est égale à la température limite de fonctionnement moins une valeur déterminée, le procédé de pilotage comporte une étape « E6 » consistant au moins à mettre en fonctionnement un groupe moto-ventilateur ;
- l'étape « E6 » consiste à piloter un thermostat pour refroidir le liquide de refroidissement par l'intermédiaire d'un radiateur de refroidissement du circuit de refroidissement haute température ;
- si la température du liquide de refroidissement circulant dans le circuit de refroidissement basse température est inférieure à la température de consigne, ladite étape « E5 » de vérification est répétée ;
- lorsque la température du liquide de refroidissement dans le circuit de refroidissement haute température est au moins égale à une température de consigne qui est égale à la température limite de fonctionnement moins une valeur déterminée (par exemple égale à 5°C), le procédé comporte une étape « E21 » consistant à piloter le système de refroidissement en fonction de la température du liquide de refroidissement dans le circuit de refroidissement basse température, les moyens de régulation du circuit de transfert étant maintenus en position ouverte tant que la température du liquide de refroidissement dans le circuit de refroidissement basse température reste inférieure à la température limite de fonctionnement.

### BREVE DESCRIPTION DES FIGURES

D'autres caractéristiques et avantages de l'invention apparaitront au cours de la lecture de la description détaillée qui va suivre pour la compréhension de laquelle on se reportera aux dessins annexés dans lesquels :

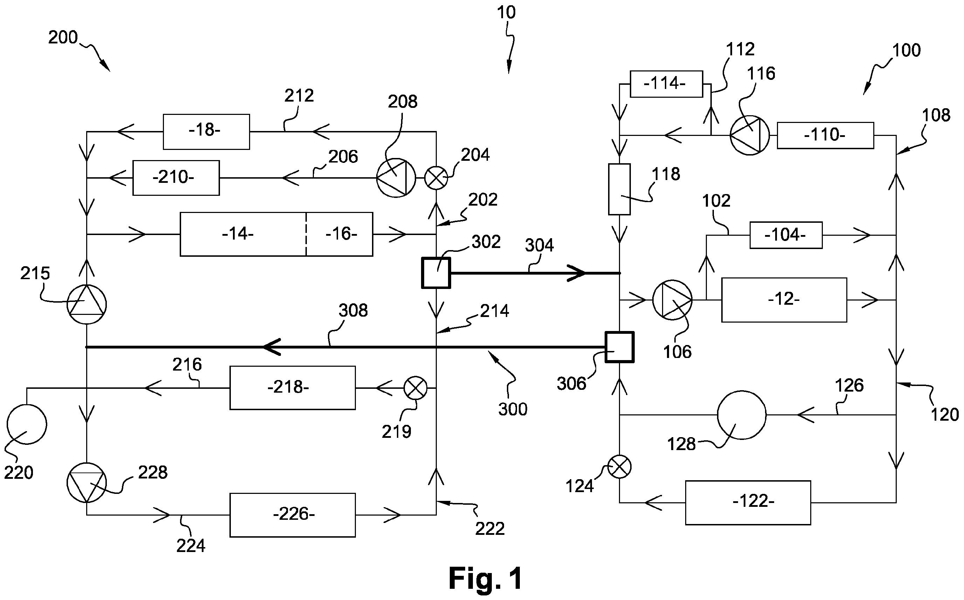

- la figure 1 est une représentation schématique d'un système de refroidissement pour un véhicule hybride selon un exemple de réalisation et qui illustre un circuit de transfert comportant des moyens de régulation pour contrôler sélectivement la circulation du liquide de refroidissement à travers le circuit de transfert reliant respectivement un circuit de refroidissement haute température et un circuit de refroidissement basse température ;

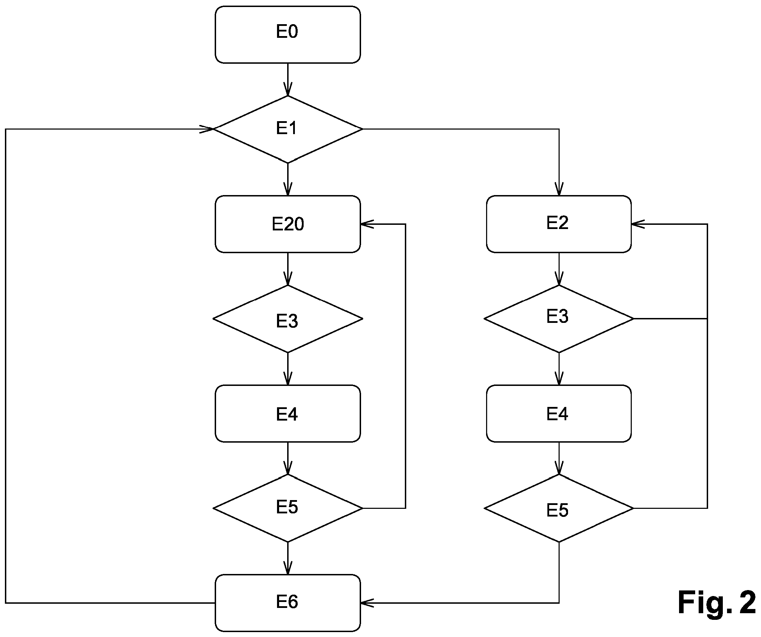

- la figure 2 est un diagramme logique qui représente les étapes d'un procédé de pilotage pour commander un système de refroidissement selon la figure 1 et qui illustre la stratégie de pilotage du système de refroidissement selon un exemple de réalisation de l'invention ;

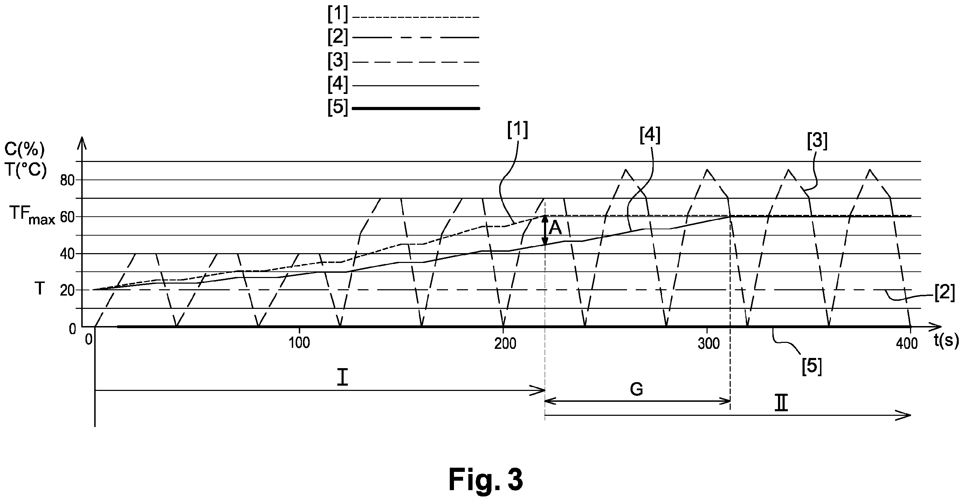

- la figure 3 est une représentation graphique qui représente différentes courbes illustrant le fonctionnement d'un système de refroidissement selon la stratégie de la figure 2 et qui illustre pour l'ordonnée d'une part les températures du liquide de refroidissement dans les circuits de refroidissement haute et basse températures et, d'autre part, la charge « C » des moteurs thermique et électrique (exprimées en pourcentage %), les courbes correspondantes étant représentées en fonction du temps (exprimé en secondes) porté en abscisse ;

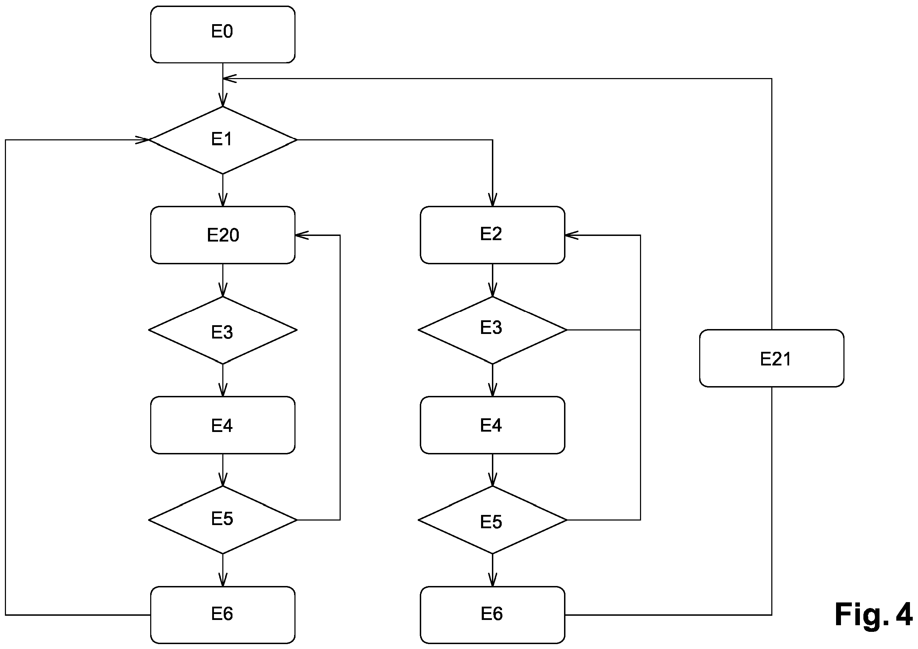

- la figure 4 est un diagramme logique qui représente les étapes d'un procédé de pilotage pour commander un système de refroidissement selon la figure 1 et qui illustre une variante de réalisation de la stratégie de pilotage du système de refroidissement selon la figure 2.

### DESCRIPTION DETAILLEE DES FIGURES

On a représenté sur la figure 1, un exemple de réalisation d'un système 10 de refroidissement pour un véhicule hybride (non représenté).

Un tel véhicule hybride est encore appelé « PHEV », acronyme en anglais de « *Plug-in Hybrid Electric Vehicule* » et se caractérise par le fait de comporter un moteur 12 thermique d'une part, et un moteur 14 électrique, d'autre part.

Le véhicule hybride est susceptible d'être utilisé selon différents modes de fonctionnement qui comportent :
- un mode électrique, aussi parfois appelé « ZEV » acronyme en anglais de « *Zero Emission Vehicule* », dans lequel le véhicule est propulsé et/ou tracté par le moteur électrique sans intervention du moteur thermique ;
- un mode thermique dans lequel le véhicule est tracté et/ou propulsé au moyen du seul moteur thermique sans intervention du moteur électrique ;
- un mode hybride dans lequel le véhicule est tracté et/ou propulsé simultanément au moyen des moteurs thermique et électrique.

Le moteur 14 électrique convertit l'énergie électrique en énergie mécanique durant les phases de traction du véhicule et inversement l'énergie mécanique en énergie électrique lors des phases de freinage (encore appelées « régénération »).

Pour son fonctionnement, le moteur 14 électrique est associé à différents organes dont au moins un convertisseur onduleur 16.

Le convertisseur 16 est le calculateur de puissance du moteur 14 électrique qui reçoit les paramètres de fonctionnement de multiples capteurs dont les pédales d'accélérateur et de frein afin de commander le moteur 14 en traction ou en régénération.

Une batterie 18 constitue un autre de ces organes, ladite batterie 18 stockant sous forme électrique l'énergie récupérée, cinétique ou potentielle. La batterie 18 est une batterie dite « haute tension » par comparaison à l'autre batterie notamment utilisée pour le démarrage du moteur 12 thermique.

La batterie 18 doit cependant être au moins à une température (Tu) d'utilisation pour pouvoir délivrer de l'énergie électrique au moteur 14 électrique.

De manière non limitative, la température (Tu) d'utilisation de la batterie 18 est par exemple de 10°C. L'une des conditions pour utiliser le véhicule hybride en mode électrique est que la batterie présente une température supérieure ou égale à ladite température (Tu) d'utilisation.

A défaut et tel qu'expliqué en préambule dans le cas d'un démarrage, le véhicule hybride doit être utilisé en mode thermique au moins jusqu'à ce que la batterie 18 atteigne une température supérieure ou égale à ladite température (Tu) d'utilisation permettant une utilisation du mode électrique.

Bien que non représentés en détails sur la figure 1, les autres organes associés au moteur 14 électrique comportent généralement au moins un convertisseur DC/DC et un chargeur, ou encore un alterno-démarreur.

Le convertisseur DC/DC permet de recharger la batterie 12V au moyen de la batterie 18 haute tension et d'alimenter des consommateurs électriques lors de l'activation du véhicule par la mise du contact tandis que le chargeur permet d'adapter l'énergie fournie par le réseau de distribution afin de recharger la batterie 18 haute tension.

Le système 10 de refroidissement comporte au moins un circuit 100 de refroidissement, dit circuit de refroidissement haute température.

Le circuit 100 de refroidissement haute température est utilisé pour refroidir au moins le moteur 12 thermique du véhicule hybride.

De préférence, le véhicule hybride est équipé d'au moins un dispositif de dépollution par recirculation des gaz d'échappement de type basse pression (non représenté).

Le dispositif de dépollution par recirculation des gaz d'échappement de type basse pression est en relation de transfert thermique avec le circuit 100 de refroidissement haute température.

Le circuit 100 de refroidissement haute température comporte au moins une conduite 102 de refroidissement, montée en dérivation par rapport au moteur 12, dans laquelle est agencé au moins un échangeur 104 thermique.

L'échangeur 104 thermique est destiné à refroidir des gaz d'échappement utilisés par le dispositif de dépollution par recirculation des gaz d'échappement de type basse pression.

Le circuit 100 de refroidissement haute température comporte au moins une pompe 106 agencée en amont du moteur 12 pour la mise en circulation d'un liquide de refroidissement à travers ledit circuit 100.

Le circuit 100 de refroidissement haute température comporte au moins une première boucle 108 de refroidissement reliée à la sortie du moteur 12 thermique et à l'entrée de la pompe 106.

La première boucle 108 de refroidissement du circuit 100 de refroidissement haute température comporte au moins un aérotherme 110 pour le chauffage du véhicule hybride.

La première boucle 108 de refroidissement du circuit 100 de refroidissement haute température comporte au moins une conduite 112 de refroidissement qui, en dérivation par rapport à la première boucle 108, comporte au moins un échangeur 114 thermique.

L'échangeur 114 thermique est destiné à refroidir les gaz d'échappement d'un autre dispositif de dépollution (non représenté) par recirculation des gaz d'échappement de type haute pression.

La première boucle 108 de refroidissement du circuit 100 de refroidissement haute température comporte au moins une pompe 116 additionnelle.

La pompe 116 est agencée en aval de l'aérotherme 110 et en amont de la conduite 112 de refroidissement associée au dispositif de dépollution par recirculation des gaz d'échappement de type haute pression.

De préférence, la première boucle 108 de refroidissement du circuit 100 de refroidissement haute température comporte un échangeur 118 thermique de type eau-huile pour le refroidissement de l'huile utilisée dans le moteur 12 thermique.

La circulation du liquide de refroidissement dans la première boucle 108 de refroidissement du circuit 100 de refroidissement haute température s'effectue suivant les flèches représentées sur la figure 1, soit une circulation selon un sens de rotation antihoraire.

Le circuit 100 de refroidissement haute température comporte au moins une deuxième boucle 120 de refroidissement reliée à la sortie du moteur 12 thermique et à l'entrée de la pompe 106.

La deuxième boucle 120 de refroidissement du circuit 100 de refroidissement haute température comporte au moins un radiateur 122 de refroidissement.

Le radiateur 122 est destiné à refroidir le liquide de refroidissement du circuit 100 de refroidissement haute température.

La deuxième boucle 120 de refroidissement du circuit 100 de refroidissement haute température comporte un thermostat 124 qui est agencé en aval du radiateur 122 de refroidissement.

La deuxième boucle 120 de refroidissement du circuit 100 de refroidissement haute température comporte au moins une conduite 126 dite de by-pass qui est montée en dérivation par rapport au radiateur 122 de refroidissement.

La conduite 126 comporte un vase 128 d'expansion pour assurer une fonction de dégazage du liquide de refroidissement.

La circulation du liquide de refroidissement dans la deuxième boucle 120 de refroidissement du circuit 100 de refroidissement haute température s'effectue suivant les flèches représentées sur la figure 1, soit une circulation selon un sens de rotation horaire.

Le système 10 de refroidissement comporte un circuit 200 de refroidissement, dit circuit de refroidissement basse température, pour refroidir au moins le moteur 14 électrique équipant le véhicule hybride.

Dans le circuit 100 de refroidissement haute température associé au moteur 12 thermique, le liquide de refroidissement atteint en fonctionnement des températures qui sont trop élevées, par exemple d'environ 90°C, pour que ce même liquide de refroidissement puisse être utilisé pour le refroidissement de certains organes associés au fonctionnement du moteur 14 électrique qui doivent être maintenus à des températures inférieures, par exemple inférieures à 60°C.

C'est la raison pour laquelle, le système 10 de refroidissement d'un véhicule hybride comporte d'une part un circuit 100 de refroidissement du moteur 12 thermique haute température et, d'autre part, un circuit 200 de refroidissement du moteur 14 électrique basse température.

Le circuit 200 de refroidissement basse température est également utilisé pour le refroidissement des autres organes précités associés au moteur 14 électrique pour assurer le fonctionnement du véhicule en mode électrique.

Le moteur 14 électrique est généralement associé à au moins un convertisseur onduleur 16, un chargeur, un convertisseur DC/DC, voir un alterno-démarreur.

Le circuit 200 de refroidissement basse température comporte au moins une première boucle 202 de refroidissement.

La première boucle 202 de refroidissement comporte au moins une vanne 204 de régulation, par exemple une vanne du type trois voies, pour réguler la circulation du liquide de refroidissement dans la première boucle 202.

La première boucle 202 de refroidissement comporte au moins une première conduite 206 comportant une pompe 208 électrique et un refroidisseur 210.

La première boucle 202 de refroidissement comporte au moins une deuxième conduite 212, parallèle à la première conduite 206, comportant la batterie 18 haute tension associée au moteur 14 électrique.

La vanne 204 de régulation est destinée à réguler la circulation du liquide de refroidissement dans la première conduite 206 et la deuxième conduite 212 formant respectivement la première boucle 202 de refroidissement du circuit 200 de refroidissement basse température.

La circulation du liquide de refroidissement dans la première boucle 202 de refroidissement du circuit 200 de refroidissement basse température s'effectue suivant les flèches représentées sur la figure 1, soit une circulation selon un sens de rotation antihoraire.

Le circuit 200 de refroidissement basse température comporte au moins une deuxième boucle 214 de refroidissement.

La deuxième boucle 214 de refroidissement comporte au moins une conduite 216 dans laquelle est agencé au moins un radiateur 218 pour refroidir le liquide de refroidissement circulant dans le circuit 200 de refroidissement basse température.

La deuxième boucle 214 de refroidissement comporte une pompe 215 électrique qui est agencée en aval du radiateur 218 de refroidissement de la conduite 216.

La deuxième boucle 214 de refroidissement du circuit 200 de refroidissement basse température comporte au moins un thermostat 219 qui est agencé en amont du radiateur 218 afin de contrôler la circulation du liquide de refroidissement dans la conduite 216, à travers le radiateur 218.

La circulation du liquide de refroidissement dans la deuxième boucle 214 de refroidissement s'effectue suivant les flèches représentées sur la figure 1, soit une circulation selon un sens de rotation horaire.

La deuxième boucle 214 de refroidissement du circuit 200 de refroidissement basse température comporte au moins un vase 220 d'expansion pour assurer une fonction de dégazage.

Le vase 220 d'expansion est par exemple agencé en aval du radiateur 218 de refroidissement destiné à refroidir le liquide de refroidissement dans le circuit 200 de refroidissement basse température.

Le circuit 200 de refroidissement basse température comporte au moins une troisième boucle 222 de refroidissement.

La troisième boucle 222 de refroidissement du circuit 200 de refroidissement basse température comporte au moins une première conduite 224 comportant au moins un refroidisseur 226 d'air de suralimentation.

De préférence, le refroidisseur 226 d'air de suralimentation est du type air-eau tel qu'encore désigné par l'acronyme anglais « WCAC » pour « *Water-cooled Charge Air Cooler* ».

La troisième boucle 222 de refroidissement du circuit 200 de refroidissement basse température comporte une pompe 228 électrique. La pompe 228 électrique est agencée en amont du refroidisseur 226 d'air de suralimentation.

En variante non représentée, la troisième boucle 222 de refroidissement du circuit de refroidissement basse température comporte une deuxième conduite, dite de by-pass, qui est montée en dérivation par rapport au refroidisseur 226 d'air de suralimentation agencé dans la première conduite 224.

L'intérêt d'établir une telle conduite de dérivation (ou « by-pass ») par rapport au refroidisseur 226 d'air de suralimentation réside dans la possibilité offerte de dériver sélectivement le liquide de refroidissement du circuit de refroidissement basse température. Avantageusement, des moyens de régulation tels qu'une vanne sont alors prévus.

Lorsque la température du liquide de refroidissement circulant dans le circuit de refroidissement basse température n'est pas assez élevée, en particulier inférieure à la température (Tu) d'utilisation de la batterie 18, le moteur thermique 12 est alors en l'état de fonctionnement de sorte que le liquide de refroidissement puisse alors prélever au niveau du refroidisseur 226 des calories de l'air de suralimentation pour accélérer l'augmentation de la température du liquide de refroidissement.

La circulation du liquide de refroidissement dans la troisième boucle 222 de refroidissement s'effectue suivant les flèches représentées sur la figure 1, soit une circulation selon un sens de rotation antihoraire.

Le système 10 de refroidissement comporte un circuit 300 de transfert de liquide de refroidissement reliant le circuit 100 de refroidissement haute température et le circuit 200 de refroidissement basse température.

Le circuit 300 de transfert est apte à transférer sélectivement, par l'intermédiaire du liquide de refroidissement, des calories entre l'un et l'autre desdits circuit de refroidissement haute température et circuit de refroidissement basse température en fonction du cas.

Le circuit 300 de transfert comporte des moyens de régulation qui sont commandés pour établir sélectivement une circulation de liquide de refroidissement à travers ledit circuit 300 de transfert de manière à transférer avec ledit liquide de refroidissement des calories entre le circuit 100 de refroidissement et le circuit 200 de refroidissement.

Les moyens de régulation comportent au moins une première vanne 302 associée à une première conduite 304 aller du circuit 300 de transfert et une deuxième vanne 306 associée à une deuxième conduite 308 retour du circuit 300 de transfert.

Les moyens 302, 306 de régulation sont commandés entre au moins une position de fermeture et une position d'ouverture dans laquelle une circulation du liquide de refroidissement est établie entre le circuit 100 de refroidissement et le circuit 200 de refroidissement.

La première conduite 304 aller du circuit 300 de transfert est raccordée en aval de l'échangeur 108 de la première boucle 108 de refroidissement du circuit 100 de refroidissement haute température.

La première conduite 304 aller du circuit 300 de transfert est raccordée entre les première et deuxième boucles 202, 214 de refroidissement du circuit 200 de refroidissement basse température, en amont de la deuxième boucle 214.

La première conduite 304 aller du circuit 300 de transfert se raccorde à la deuxième boucle 214 de refroidissement du circuit 200 de refroidissement basse température, en aval du moteur 14 électrique et en amont du radiateur 218 pour le refroidissement du liquide de refroidissement circulant dans le circuit 200 de refroidissement basse température.

La première vanne 302 est agencée en entrée de la première conduite 304 aller, à la jonction de ladite première conduite 304 aller avec le circuit 200 de refroidissement basse température.

La première conduite 304 aller du circuit 300 de transfert se raccorde à la première boucle 108 de refroidissement du circuit 100 de refroidissement haute température, par exemple et tel que représenté sur la figure 1 en amont de la pompe 106.

La deuxième conduite 308 retour du circuit 300 de transfert est raccordée en aval à la deuxième boucle 120 de refroidissement du circuit 100 de refroidissement haute température et en aval à la deuxième boucle 214 de refroidissement du circuit 200 de refroidissement basse température.

La deuxième conduite 308 retour du circuit 300 de transfert est raccordée à la deuxième boucle 214 de refroidissement du circuit 200 de refroidissement basse température en aval du radiateur 218 de refroidissement du liquide de refroidissement du circuit 200 de refroidissement basse température et en amont de la pompe 215 électrique.

La deuxième vanne 306 est agencée en entrée de la deuxième conduite 308 retour, à la jonction de ladite deuxième conduite 308 retour avec le circuit 100 de refroidissement haute température.

On a représenté sur la figure 2 un diagramme logique selon un exemple de réalisation de l'invention qui représente les différentes étapes mises en oeuvre par le procédé de pilotage d'un système 10 de refroidissement selon la figure 1.

Le procédé de pilotage du système 10 de refroidissement est destiné à être mis en oeuvre en mode électrique (ZEV), en particulier lors d'un démarrage à froid du véhicule hybride.

De préférence, le procédé de pilotage comporte une étape E0 d'initialisation consistant à vérifier des paramètres de fonctionnement liés au roulage en mode électrique tels que par exemple la charge de la batterie 18 haute tension ou encore que la température de la batterie 18 est bien supérieure à la température minimale (Tu-min) d'utilisation.

L'étape E0 d'initialisation est notamment mise en oeuvre lors d'un démarrage du véhicule hybride.

Selon l'invention, le procédé de pilotage du système 10 de refroidissement en mode électrique comporte au moins une première étape « E1 » consistant à déterminer si le liquide de refroidissement présent dans le circuit 100 de refroidissement haute température est à une température inférieure ou supérieure à une température (TFmax) limite de fonctionnement du circuit 200 de refroidissement basse température.

En effet, un transfert de calories du circuit 200 de refroidissement basse température vers le circuit 100 de refroidissement haute température pour améliorer le refroidissement en mode électrique n'est possible que si le liquide de refroidissement du circuit 100 de refroidissement haute température est à une température inférieure à la température (TFmax) limite de fonctionnement du circuit 200 de refroidissement basse température.

A titre d'exemple non limitatif, la température (TFmax) limite de fonctionnement du circuit 200 de refroidissement basse température est de l'ordre de 60°C.

On comprendra par exemple que tel sera le cas lors d'un démarrage froid du véhicule hybride mais pas immédiatement après une utilisation prolongée du moteur thermique du véhicule hybride.

Lorsque la première étape « E1 » détermine que la température du liquide de refroidissement dans le circuit 100 de refroidissement haute température est inférieure à la température (TFmax) limite de fonctionnement du circuit 200 de refroidissement basse température, le procédé de pilotage comporte alors une étape « E2 » consistant à commander lesdits moyens 302, 306 de régulation du circuit 300 de transfert en position ouverte.

La deuxième étape du procédé de pilotage consiste ainsi à commander sélectivement les moyens 302, 306 de régulation du circuit 300 de transfert en fonction du résultat de la première étape « E1 ».

Tel qu'illustré sur la figure 2, si la température du liquide de refroidissement dans le circuit 100 de refroidissement haute température est au moins égale ou supérieure à la température (TFmax) limite de fonctionnement du circuit 200 de refroidissement basse température, le procédé de pilotage comporte alors alternativement une étape « E20 » consistant à commander ou maintenir les moyens 302, 306 de régulation du circuit 300 de transfert en position fermée.

De préférence, les moyens 302, 306 de régulation du circuit 300 de transfert occupent par défaut une position fermée dans laquelle le circuit 100 de refroidissement haute température et le circuit 200 de refroidissement basse température ne sont pas mis en communication l'un avec l'autre.

Grâce aux moyens 302, 306 de régulation du circuit 300 de transfert, on établit sélectivement une communication entre le circuit 100 de refroidissement haute température et le circuit 200 de refroidissement basse température.

Le circuit 300 de transfert ne modifie pas le fonctionnement général du système 10 de refroidissement du véhicule hybride, notamment lors de l'alternance des phases de roulage électrique et thermique.

Le système 10 de refroidissement et plus particulièrement le circuit 300 de transfert comportant les moyens 302, 306 de régulation permet de procéder sélectivement, par l'intermédiaire du liquide de refroidissement, à des échanges thermiques c'est à dire de calories entre le circuit 100 de refroidissement haute température et le circuit 200 de refroidissement basse température.

Tel qu'expliqué en préambule, la batterie 18 haute tension présente une température maximale (Tu-max) d'utilisation en dessous de laquelle ladite batterie 18 doit être maintenue, ladite température maximale (Tu-max) d'utilisation constituant un premier seuil de température utilisé pour le pilotage du système 10 de refroidissement.

Le circuit 200 de refroidissement basse température a en outre pour fonction de refroidir la batterie 18 haute tension en la maintenant à une température inférieure à la température maximale (Tu-max) d'utilisation.

A titre d'exemple non limitatif, la température maximale (Tu-max) d'utilisation de la batterie 18 haute tension est de 34°C.

Le procédé de pilotage comporte une étape « E3 » de vérification consistant à déterminer si la température du liquide de refroidissement circulant dans le circuit 200 de refroidissement basse température est inférieure à la température maximale (Tu-max) d'utilisation de la batterie 18 haute tension.

Lorsque la température du liquide de refroidissement circulant dans le circuit 200 de refroidissement basse température est supérieure à la température maximale (Tu-max) d'utilisation de la batterie 18 haute tension, le procédé de pilotage comporte une étape « E4 » consistant à commander au moins la fermeture de la vanne 204 de régulation.

L'étape « E4 » de fermeture de la vanne 204 permet d'interrompre la circulation du liquide de refroidissement dans une conduite 212 du circuit 200 de refroidissement basse température comportant la batterie 18 haute tension.

Lorsque la température du liquide de refroidissement circulant dans le circuit 200 de refroidissement basse température est inférieure à la température maximale (Tu-max) d'utilisation de la batterie 18 haute tension, ladite étape « E3 » de vérification est alors avantageusement répétée.

De préférence, l'étape « E4 » du procédé de pilotage consiste encore à commander la pompe 208 électrique pour faire circuler le liquide de refroidissement dans la deuxième conduite 206 de la première boucle 202 du circuit 200 de refroidissement basse température comportant au moins le refroidisseur 210.

Tel qu'expliqué en préambule, le circuit 200 de refroidissement basse température présente une température (TFmax) limite de fonctionnement constituant un deuxième seuil de température utilisé pour le pilotage du système 10 de refroidissement.

La température (TFmax) limite de fonctionnement est notamment déterminée en fonction des organes de puissance associés au moteur électrique 14, en particulier les composants électroniques.

A titre d'exemple non limitatif, la température (TFmax) limite de fonctionnement du circuit 200 de refroidissement basse température est de l'ordre de 60°C.

Tel qu'illustré sur la figure 2, le procédé de pilotage comporte une étape « E5 » consistant à déterminer si la température du liquide de refroidissement circulant dans le circuit 200 de refroidissement basse température est inférieure à la température (TFmax) limite de fonctionnement.

Lorsque l'étape « E5 » détermine que la température du liquide de refroidissement circulant dans le circuit 200 de refroidissement basse température est supérieure à une température (TC) de consigne qui est égale à ladite température (TFmax) limite de fonctionnement moins une valeur (β) déterminée, le procédé de pilotage comporte une étape « E6 » consistant à piloter le thermostat 124 pour refroidir le liquide de refroidissement par l'intermédiaire du radiateur 122 de refroidissement du circuit 100 de refroidissement haute température.

Ladite valeur (β) est par exemple de l'ordre de 5°C afin de prévenir toute atteinte de la température (TFmax) limite de fonctionnement.

On rappelle que le thermostat 124 est généralement commandé en position ouverte pour une température de liquide de refroidissement bien supérieure, par exemple de l'ordre de 80°C à 90°C, correspondant à son utilisation en mode thermique.

L'étape « E6 » consiste encore à mettre en fonctionnement un groupe moto-ventilateur (non représenté sur la figure 1) du système 10 de refroidissement.

Si la température du liquide de refroidissement circulant dans le circuit 200 de refroidissement basse température est inférieure à la température (TC) de consigne, l'étape « E5 » de vérification est alors avantageusement répétée.

Dans la présente description, on entend par « répétée » la mise en oeuvre d'une étape de manière itérative, avec une fréquence donnée.

Tel qu'indiqué précédemment, les moyens 302, 306 de régulation du circuit 300 de transfert sont fermés ou maintenus en position fermée selon une étape « E20 » lorsque la température du liquide de refroidissement dans le circuit 100 de refroidissement haute température est ou devient au moins égale ou supérieure à la température (TFmax) limite de fonctionnement du circuit 200 de refroidissement basse température.

Dans ce cas et comme représenté sur la figure 2, les étapes « E3 » à « E6 » sont également mises en oeuvre afin de piloter le refroidissement en mode électrique, ledit refroidissement étant alors assuré par le seul circuit 200 de refroidissement basse température.

De préférence, la vanne 204 de régulation est par défaut en position ouverte pour permettre la circulation du liquide de refroidissement dans la conduite 212 du circuit 200 de refroidissement basse température comportant la batterie 18 haute tension.

La vanne 204 de régulation est ainsi commandée en position fermée lorsque l'étape « E3 » détermine que la température du liquide de refroidissement circulant dans le circuit 200 de refroidissement basse température est supérieure à la température maximale (Tu-max) d'utilisation de la batterie 18 haute tension.

Le groupe moto-ventilateur du système 10 de refroidissement associé respectivement au radiateur 218 de refroidissement du circuit 200 de refroidissement basse température et au radiateur 122 de refroidissement du circuit haute température, est par défaut à l'arrêt.

Par comparaison au cas précédent dans lequel les moyens 302, 306 de régulation du circuit 300 de transfert étaient ouverts, l'étape « E6 » consiste ici uniquement à mettre en fonctionnement le groupe moto-ventilateur afin d'accroître le refroidissement du liquide de refroidissement obtenu au moyen du radiateur 218 de refroidissement que comporte le circuit 200 de refroidissement basse température.

Dans l'exemple de réalisation illustré sur la figure 2, les moyens 302, 306 de régulation du circuit 300 de transfert occupent la position fermée dès lors que la température du liquide de refroidissement dans le circuit 100 de refroidissement haute température est au moins égale à une température (TC) de consigne qui est égale à la température (TFmax) limite de fonctionnement moins une valeur (β) déterminée.

On décrira ci-après par comparaison, une variante de réalisation représentée à la figure 4 dans laquelle il n'est justement pas procédé à la fermeture du circuit 300 de transfert.

Selon cette variante, lorsque la température du liquide de refroidissement dans le circuit 100 de refroidissement haute température est au moins égale à ladite température (TC) de consigne voisine de la température (TFmax) limite de fonctionnement, les moyens 302, 306 de régulation du circuit 300 de transfert sont maintenus en position ouverte.

Le procédé de pilotage comporte une étape « E21 » consistant à piloter le système 10 de refroidissement en fonction de la température du liquide de refroidissement dans le circuit 200 de refroidissement basse température.

Le refroidissement du liquide de refroidissement reste alors assuré par l'ensemble du système 10 de refroidissement, soit conjointement par le circuit 100 de refroidissement haute température et le circuit 200 de refroidissement basse température.

Avantageusement, on utilise alors le radiateur 122 comme le radiateur 218 de refroidissement ainsi que le groupe moto-ventilateur.

Dans cette variante, les moyens 302, 306 de régulation du circuit 300 de transfert sont maintenus en position ouverte tant que la température du liquide de refroidissement dans le circuit 200 de refroidissement basse température reste inférieure à la température (TFmax) limite de fonctionnement.

On a représenté à la figure 3, en fonction du temps t(s) porté an abscisse, différentes courbes qui sont respectivement identifiées par des numéros de [1] à [5].

La figure 3 illustre le fonctionnement d'un système 10 de refroidissement pour un véhicule hybride comportant un circuit de transfert de liquide de refroidissement, tel que décrit à la figure 1 et commandé conformément à la stratégie du procédé de pilotage décrit en référence à la figure 2 ou en variante à la figure 4.

La courbe [1] représente, en fonction du temps t(s), l'évolution de la température T en (°C) du liquide de refroidissement présent dans un circuit 200 de refroidissement basse température.

Plus précisément, la courbe [1] illustre l'évolution de la température dans l'hypothèse d'un système 10 dépourvu de circuit 300 de transfert ou dont les moyens 302, 306 de régulation du circuit 300 de transfert seraient en position fermée, c'est à dire un refroidissement assuré uniquement par le circuit 200 de refroidissement basse température.

La courbe [1] illustre par conséquent le refroidissement tel qu'il était obtenu jusqu'alors avec un système 10 selon l'état de la technique.

La courbe [1] correspond également au cas où l'étape « E1 » détermine que le liquide de refroidissement présent dans le circuit 100 de refroidissement haute température est à une température sensiblement égale ou supérieure à la température (TFmax) limite de fonctionnement du circuit 200 de refroidissement basse température.

La courbe [2] représente, en fonction du temps t(s), la température T en (°C) du liquide de refroidissement dans le circuit 100 de refroidissement haute température lorsque le roulage s'effectue en mode électrique avec un refroidissement assuré uniquement par le circuit 200 de refroidissement basse température, soit selon l'état de la technique.

Dans l'hypothèse d'un démarrage à froid, la température T en (°C) du liquide de refroidissement dans le circuit 100 de refroidissement haute température est égale à la température ambiante, soit dans l'exemple égale à 20°C.

Sur la courbe [2], la température T en (°C) du liquide de refroidissement dans le circuit 100 de refroidissement haute température reste constante puisque le moteur 12 thermique n'est pas en fonctionnement et que le circuit 100 de refroidissement haute température n'est pas relié au circuit 200 de refroidissement basse température.

La courbe [3] représente l'évolution de la charge (en %) du moteur 14 électrique en mode électrique en fonction du temps t(s).

La courbe [4] illustre l'invention et représente, en fonction du temps t(s), l'évolution de la température T en (°C) du liquide de refroidissement dans le système 10 de refroidissement dont le circuit 100 de refroidissement haute température et le circuit 200 de refroidissement basse température sont mis en communication fluidique par le circuit 300 de transfert, les moyens 302, 306 de régulation étant commandés en position ouverte conformément à l'étape « E2 ».

Tel que représenté sur la figure 3, à l'instant t = 0 s, ici lors du démarrage du véhicule hybride, les courbes [1], [2] et [4] de température sont à une valeur de 20°C, c'est à dire comme indiqué précédemment, la valeur de la température ambiante à l'extérieur du véhicule.

La courbe [5] représente, en fonction du temps t(s), l'évolution de la charge (en %) du moteur 12 thermique qui est ici nulle puisque le roulage s'effectue en mode électrique (ZEV).

Sur la figure 3, on a identifié sous l'axe temporel des abscisses différentes phases de fonctionnement qui se succèdent chronologiquement, chacune des phases étant identifiées par un chiffre romain allant de I à II.

La première phase I correspond ainsi à une phase de montée en température progressive du liquide de refroidissement.

La figure 3 illustre plus particulièrement dès cette première phase I les avantages de la stratégie, à savoir une limitation de la montée en température du liquide de refroidissement en mode électrique.

Selon l'invention, l'amélioration du refroidissement grâce auquel on limite la montée en température du liquide de refroidissement résulte du fait que l'on utilise en plus le circuit 100 de refroidissement haute température et pas uniquement le circuit 200 de refroidissement basse température.

Avantageusement, on exploite en effet l'inertie thermique du circuit 100 de refroidissement haute température, le volume du liquide de refroidissement étant celui de l'ensemble du système 10 de refroidissement, des deux circuits 100 et 200 de refroidissement.

L'amélioration du refroidissement obtenu se traduit par un abaissement A de la température du liquide de refroidissement en fonctionnement comme cela est mis en évidence par la comparaison des courbes [1] et [4].

En effet, la température du liquide de refroidissement suivant la courbe [1] correspondant à un refroidissement avec le seul circuit 200 de refroidissement basse température augmente plus rapidement qu'elle ne le fait lorsque les deux circuits 100 et 200 de refroidissement sont mis en communication en ouvrant les moyens 302, 306 de régulation du circuit 300 de transfert.

Sur la figure 3, on a illustré la limitation de la montée en température du liquide de refroidissement que traduit l'abaissement A au moment où, ici à t = 220 s, la température (TFmax) limite de fonctionnement ici égale à 60°C est atteinte par la courbe [1] correspondant à l'état de la technique.

Par comparaison avec la courbe [4] illustrant le procédé de pilotage selon l'invention, soit lorsque le refroidissement est réalisé avec les deux circuits 100 et 200 de refroidissement, on constate que la température du liquide de refroidissement à t = 220 s est inférieure à 60°C.

Plus précisément, la température du liquide de refroidissement est globalement de 45 °C, soit un abaissement A de la température de l'ordre de 15°C à t = 220 s.

Comme on peut le voir l'écart de température entre les courbes [1] et [4] n'est pas constant et évolue dans le temps.

La deuxième phase II correspond à une phase de régulation de la température du liquide de refroidissement.

La deuxième phase II est illustrée sur la figure 3 par rapport à la courbe [1] et débute ainsi lorsque la température (TFmax) limite de fonctionnement ici égale à 60°C est atteinte.

La comparaison de la courbe [4] par rapport à la courbe [1] permet de constater que le liquide de refroidissement atteint plus tardivement cette même température (TFmax) limite de fonctionnement, plus précisément l'atteint avec un décalage temporel correspondant à un gain G de temps.

Pendant le laps de temps correspondant, l'amélioration du refroidissement réalisée permet un fonctionnement en mode électrique à une température moindre.

On recherche à réguler le refroidissement du liquide de refroidissement pour obtenir une température de fonctionnement la plus basse possible, par exemple de l'ordre de 40°C, et cela pendant le plus longtemps possible.

Avantageusement, la limitation de la montée en température atteinte grâce à l'invention permet en outre d'améliorer le rendement de la batterie 18 haute tension ou encore d'augmenter la fiabilité et la durée de vie des organes de puissance, notamment les composants électroniques.

## Revendications

1. Procédé de pilotage d'un système (10) de refroidissement d'un véhicule hybride comportant au moins un moteur (12) thermique et un moteur (14) électrique, le véhicule hybride étant apte à prendre des modes de fonctionnement suivants :
- un mode électrique, dans lequel le véhicule est propulsé et/ou tracté par le moteur électrique sans intervention du moteur thermique ;
- un mode thermique dans lequel le véhicule est tracté et/ou propulsé au moyen du seul moteur thermique sans intervention du moteur électrique ;
- un mode hybride dans lequel le véhicule est tracté et/ou propulsé simultanément au moyen des moteurs thermique et électrique ;
le système (10) de refroidissement comportant au moins :
- un circuit (100) de refroidissement haute température pour refroidir le moteur (12) thermique et un circuit (200) de refroidissement basse température pour refroidir le moteur (14) électrique et une batterie (18) haute tension associée, et
- un circuit (300) de transfert de liquide de refroidissement reliant le circuit (100) de refroidissement haute température et le circuit (200) de refroidissement basse température et comportant des moyens (302, 306) de régulation pour contrôler la circulation du liquide de refroidissement dans le circuit (300) de transfert,
le procédé de pilotage du système (10) de refroidissement en mode électrique comporte au moins :
- une étape « E0 » d'initialisation consistant à vérifier des paramètres de fonctionnement liés au roulage en mode électrique, tels que la charge de la batterie (18) haute tension ou encore que la température de la batterie (18) est supérieure à la température minimale (Tu-min) d'utilisation, l'étape « E0 » d'initialisation étant notamment mise en oeuvre lors d'un démarrage du véhicule hybride,
- une étape « E1 » consistant à déterminer si le liquide de refroidissement présent dans le circuit (100) de refroidissement haute température est à une température inférieure ou supérieure à une température (TFmax) limite de fonctionnement du circuit (200) de refroidissement basse température ; et
- lorsque la température du liquide de refroidissement dans le circuit (100) de refroidissement haute température est inférieure à la température (TFmax) limite de fonctionnement du circuit (200) de refroidissement basse température, une étape « E2 » consistant à commander lesdits moyens (302, 306) de régulation du circuit (300) de transfert en position ouverte.

2. Procédé selon la revendication 1, **caractérisé en ce que** si la température du liquide de refroidissement dans le circuit (100) de refroidissement haute température est au moins égale (ou supérieure) à la température (TFmax) limite de fonctionnement du circuit (200) de refroidissement basse température, le procédé de pilotage comporte une étape « E20 » consistant à commander ou maintenir les moyens (302, 306) de régulation du circuit (300) de transfert en position fermée.

3. Procédé selon l'une des revendications 1 ou 2, **caractérisé en ce que** le procédé de pilotage comporte une étape « E3 » consistant à déterminer si la température du liquide de refroidissement circulant dans le circuit (200) de refroidissement basse température est inférieure à la température maximale (Tu-max) d'utilisation de la batterie (18) haute tension.

4. Procédé selon la revendication 3, **caractérisé en ce que** si la température du liquide de refroidissement circulant dans le circuit (200) de refroidissement basse température est supérieure à la température maximale (Tu-max) d'utilisation de la batterie (18) haute tension, le procédé de pilotage comporte une étape « E4 » consistant à commander au moins la fermeture d'une vanne (204) de régulation de manière à interrompre la circulation du liquide de refroidissement dans une conduite (212) du circuit (200) de refroidissement basse température comportant la batterie (18) haute tension.

5. Procédé selon la revendication 4, **caractérisé en ce que** lorsque la température du liquide de refroidissement circulant dans le circuit (200) de refroidissement basse température est inférieure à la température maximale (Tu-max) d'utilisation de la batterie (18) haute tension, ladite étape « E3 » de vérification est répétée.

6. Procédé selon l'une des revendications 4 ou 5, **caractérisé en ce que** l'étape « E4 » du procédé de pilotage consiste à commander une pompe (208) électrique pour faire circuler le liquide de refroidissement dans une conduite (206) du circuit (200) de refroidissement basse température comportant au moins un refroidisseur (210).

7. Procédé selon l'une quelconque des revendications précédentes, **caractérisé en ce que** le procédé de pilotage comporte une étape « E5 » consistant à déterminer si la température du liquide de refroidissement circulant dans le circuit (200) de refroidissement basse température est inférieure à la température (TFmax) limite de fonctionnement.

8. Procédé selon la revendication 7, **caractérisé en ce que** si la température du liquide de refroidissement circulant dans le circuit (200) de refroidissement basse température est supérieure à une température (TC) de consigne qui est égale à la température (TFmax) limite de fonctionnement moins une valeur (β) déterminée, le procédé de pilotage comporte une étape « E6 » consistant au moins à mettre en fonctionnement un groupe moto-ventilateur.

9. Procédé selon la revendication 8, **caractérisé en ce que** l'étape « E6 » consiste à piloter un thermostat (124) pour refroidir le liquide de refroidissement par l'intermédiaire d'un radiateur (122) de refroidissement du circuit (100) de refroidissement haute température.

10. Procédé selon la revendication 8, **caractérisé en ce que** si la température du liquide de refroidissement circulant dans le circuit (200) de refroidissement basse température est inférieure à la température (TC) de consigne, ladite étape « E5 » de vérification est répétée.

11. Procédé selon la revendication 1, **caractérisé en ce que** lorsque la température du liquide de refroidissement dans le circuit (100) de refroidissement haute température est au moins égale à une température (TC) de consigne qui est égale à la température (TFmax) limite de fonctionnement moins une valeur (β) déterminée, le procédé comporte une étape « E21 » consistant à piloter le système (10) de refroidissement en fonction de la température du liquide de refroidissement dans le circuit (200) de refroidissement basse température, les moyens (302, 306) de régulation du circuit (300) de transfert étant maintenus en position ouverte tant que la température du liquide de refroidissement dans le circuit (200) de refroidissement basse température reste inférieure à la température (TFmax) limite de fonctionnement.

## Patentansprüche

1. Verfahren zum Steuern eines Kühlsystems (10) eines Hybridfahrzeugs, umfassend mindestens einen Verbrennungsmotor (12) und einen Elektromotor (14), wobei das Hybridfahrzeug geeignet ist, um folgende Betriebsarten anzunehmen:
- einen elektrischen Modus, in dem das Fahrzeug durch den Elektromotor ohne Eingreifen des Verbrennungsmotors angetrieben und/oder gezogen wird;
- einen thermischen Modus, in dem das Fahrzeug allein mittels des Verbrennungsmotors ohne Eingreifen des Elektromotors gezogen und/oder angetrieben wird;
- einen Hybridmodus, in dem das Fahrzeug gleichzeitig mittels des Verbrennungs- und des Elektromotors gezogen und/oder angetrieben wird;
wobei das Kühlsystem (10) mindestens umfasst:
- einen Hochtemperatur-Kühlkreislauf (100) zum Kühlen des Verbrennungsmotors (12) und einen Niedertemperatur-Kühlkreislauf (200) zum Kühlen des Elektromotors (14) und einer zugehörigen Hochvoltbatterie (18) und
- einen Kühlflüssigkeits-Transferkreislauf (300), der den Hochtemperatur-Kühlkreislauf (100) und den Niedertemperatur-Kühlkreislauf (200) verbindet und Regelungsmittel (302, 306) zum Steuern der Zirkulation der Kühlflüssigkeit in dem Transferkreislauf (300) umfasst,
wobei das Verfahren zum Steuern des Kühlsystems (10) in dem elektrischen Modus mindestens umfasst:
- einen Initialisierungsschritt "E0", der darin besteht, die Betriebsparameter zu prüfen, die mit dem Fahren in dem elektrischen Modus verbunden sind, wie das Laden der Hochvoltbatterie (18) oder dass die Temperatur der Batterie (18) höher als die Mindestverwendungstemperatur (Tu-min) ist, wobei der Initialisierungsschritt "E0" insbesondere während eines Startens des Hybridfahrzeugs durchgeführt wird,
- einen Schritt "E1", der darin besteht, zu bestimmen, ob die in dem Hochtemperatur-Kühlkreislauf (100) vorhandene Kühlflüssigkeit eine Temperatur besitzt, die niedriger oder höher als eine Betriebsgrenztemperatur (Tfmax) des Niedertemperatur-Kühlkreislaufs (200) ist; und
- wenn die Temperatur der Kühlflüssigkeit in dem Hochtemperatur-Kühlkreislauf (100) niedriger als die Betriebsgrenztemperatur (TFmax) des Niedertemperatur-Kühlkreislaufs (200) ist, einen Schritt "E2", der darin besteht, die Mittel (302, 306) zum Regeln des Transferkreislaufs (300) in der offenen Position zu betätigen.

2. Verfahren nach Anspruch 1, **dadurch gekennzeichnet, dass,** falls die Temperatur der Kühlflüssigkeit in dem Hochtemperatur-Kühlkreislauf (100) mindestens gleich der Betriebsgrenztemperatur (TFmax) des Niedertemperatur-Kühlkreislaufs (200) (oder höher als diese) ist, das Steuerverfahren einen Schritt "E20" umfasst, der darin besteht, die Mittel (302, 306) zum Regeln des Transferkreislaufs (300) in der geschlossenen Position zu betätigen oder halten.

3. Verfahren nach einem der Ansprüche 1 oder 2,
**dadurch gekennzeichnet, dass** das Steuerverfahren einen Schritt "E3" umfasst, der darin besteht, zu bestimmen, ob die Temperatur der Kühlflüssigkeit, die in dem Niedertemperatur-Kühlkreislauf (200) zirkuliert, niedriger als die maximale Temperatur (Tu-max) der Verwendung der Hochvoltbatterie (18) ist.

4. Verfahren nach Anspruch 3, **dadurch gekennzeichnet, dass,** falls die Temperatur der Kühlflüssigkeit, die in dem Niedertemperatur-Kühlkreislauf (200) zirkuliert, höher als die maximale Temperatur (Tu-max) der Verwendung der Hochvoltbatterie (18) ist, das Steuerverfahren einen Schritt "E4" umfasst, der darin besteht, mindestens das Schließen eines Regelventils (204) zu regeln, um die Zirkulation der Kühlflüssigkeit in einer Leitung (212) des Niedertemperatur-Kühlkreislaufs (200), der die Hochvoltbatterie (18) umfasst, zu unterbrechen.

5. Verfahren nach Anspruch 4, **dadurch gekennzeichnet, dass,** wenn die Temperatur der Kühlflüssigkeit, die in dem Niedertemperatur-Kühlkreislauf (200) zirkuliert, niedriger als die maximale Temperatur (Tu-max) der Verwendung der Hochvoltbatterie (18) ist, der Prüfschritt "E3" wiederholt wird.

6. Verfahren nach einem der Ansprüche 4 oder 5,
**dadurch gekennzeichnet, dass** der Schritt "E4" des Steuerverfahrens darin besteht, eine elektrische Pumpe (208) zu regeln, um die Kühlflüssigkeit in einer Leitung (206) des Niedertemperatur-Kühlkreislaufs (200), umfassend mindestens einen Kühler (210), zirkulieren zu lassen.

7. Verfahren nach einem der vorstehenden Ansprüche,
**dadurch gekennzeichnet, dass** das Steuerverfahren einen Schritt "E5" umfasst, der darin besteht, zu bestimmen, ob die Temperatur der Kühlflüssigkeit, die in dem Niedertemperatur-Kühlkreislauf (200) zirkuliert, niedriger als die Betriebsgrenztemperatur (TFmax) ist.

8. Verfahren nach Anspruch 7, **dadurch gekennzeichnet, dass,** falls die Temperatur der Kühlflüssigkeit, die in dem Niedertemperatur-Kühlkreislauf (200) zirkuliert, höher als eine Soll-Temperatur (TC) ist, die gleich der Betriebsgrenztemperatur (TFmax) minus einem bestimmten Wert (β) ist, das Steuerverfahren einen Schritt "E6" umfasst, der mindestens darin besteht, einen Abluftventilator in Betrieb zu nehmen.

9. Verfahren nach Anspruch 8, **dadurch gekennzeichnet, dass** Schritt "E6" darin besteht, ein Thermostat (124) zu regeln, um die Kühlflüssigkeit über einen Kühlradiator (122) des Hochtemperatur-Kühlkreislaufs (100) zu kühlen.

10. Verfahren nach Anspruch 8, **dadurch gekennzeichnet, dass,** falls die Temperatur der Kühlflüssigkeit, die in dem Niedertemperatur-Kühlkreislauf (200) zirkuliert, niedriger als die Soll-Temperatur (TC) ist, der Prüfschritt "E5" wiederholt wird.

11. Verfahren nach Anspruch 1, **dadurch gekennzeichnet, dass** die Temperatur der Kühlflüssigkeit in dem Hochtemperatur-Kühlkreislauf (100) mindestens gleich einer Soll-Temperatur (TC) ist, die gleich der Betriebstemperaturgrenze (TFmax) minus einem bestimmten Wert (β) ist, wobei das Verfahren einen Schritt "E21" umfasst, der darin besteht, das Kühlsystem (10) in Abhängigkeit von der Temperatur der Kühlflüssigkeit in dem Niedertemperatur-Kühlkreislauf (200) zu steuern, wobei die Mittel (302, 306) zum Regulieren des Transferkreislaufs (300) in der offenen Position gehalten werden, solange die Temperatur der Kühlflüssigkeit in dem Niedertemperatur-Kühlkreislauf (200) unter der Betriebsgrenztemperatur (TFmax) bleibt.

## Claims

1. A method for controlling a cooling system (10) of a hybrid vehicle comprising at least one combustion engine (12) and one electric motor (14), the hybrid vehicle being able to assume the following operating modes:
- an electric mode, wherein the vehicle is propelled and/or towed by the electric motor without the intervention of the combustion engine;
- a thermal mode wherein the vehicle is towed and/or propelled solely by means of the combustion engine without the intervention of the electric motor;
- a hybrid mode wherein the vehicle is towed and/or propelled simultaneously by means of combustion engines and electric motors;
the cooling system (10) comprising at least:
- a high-temperature cooling circuit (100) for cooling the combustion engine (12) and a low-temperature cooling circuit (200) for cooling the electric motor (14) and an associated high-voltage battery (18), and
- a coolant transfer circuit (300) connecting the high-temperature cooling circuit (100) and the low-temperature cooling circuit (200) and comprising regulating means (302, 306) for controlling the circulation of coolant in the transfer circuit (300),
the method for controlling the cooling system (10) in electric mode comprises at least:
- an initialization step "E0" consisting in checking the operating parameters linked to driving in electric mode, such as the charge of the high-voltage battery (18) or that the temperature of the battery (18) is higher than the minimum usage temperature (Tu-min), the "E0" initialization step being implemented in particular when the hybrid vehicle is started up,
- a step "E1" consisting in determining whether the coolant present in the high-temperature cooling circuit (100) is at a temperature below or above an operating limit temperature (TFmax) of the low-temperature cooling circuit (200); and
- when the temperature of the coolant in the high-temperature cooling circuit (100) is below the operating limit temperature (TFmax) of the low-temperature cooling circuit (200), a step "E2" consisting in controlling said means (302, 306) for regulating the transfer circuit (300) to assume the open position.

2. The method according to claim 1, **characterized in that** if the temperature of the coolant in the high-temperature cooling circuit (100) is at least equal to (or greater than) the operating limit temperature (TFmax) of the low-temperature cooling circuit (200), the control method comprises a step "E20" consisting in controlling the means (302, 306) for regulating the transfer circuit (300) to assume the closed position, or in holding them there.

3. The method according to one of claims 1 or 2, **characterized in that** the control method comprises an "E3" step consisting in determining whether the temperature of the coolant circulating in the low-temperature cooling circuit (200) is lower than the maximum usage temperature (Tu-max) of the high-voltage battery (18).

4. The method according to claim 3, **characterized in that** if the temperature of the coolant circulating in the low-temperature cooling circuit (200) is higher than the maximum usage temperature (Tu-max) of the high-voltage battery (18), the control method comprises a step "E4" consisting in controlling at least the closure of a control valve (204) so as to interrupt the circulation of the coolant in a pipe (212) of the low-temperature cooling circuit (200) comprising the high-voltage battery (18).

5. The method according to claim 4, **characterized in that** when the temperature of the coolant circulating in the low-temperature cooling circuit (200) is lower than the maximum usage temperature (Tu-max) of the high-voltage battery (18), said checking step "E3" is repeated.

6. The method according to one of claims 4 or 5, **characterized in that** the step "E4" of the control method consists in controlling an electric pump (208) to circulate the coolant in a pipe (206) of the low-temperature cooling circuit (200) comprising at least one cooler (210).

7. The method according to any one of the preceding claims,
**characterized in that** the control method comprises a step "E5" consisting in determining whether the temperature of the coolant circulating in the low-temperature cooling circuit (200) is below the operating limit temperature (TFmax).

8. The method according to claim 7, **characterized in that** if the temperature of the coolant circulating in the low-temperature cooling circuit (200) is higher than a setpoint temperature (TC) which is equal to the operating limit temperature (TFmax) minus a specified value (β), the control method comprises a step "E6" consisting at least in starting up a motor-fan unit.

9. The method according to claim 8, **characterized in that** the step "E6" consists in controlling a thermostat (124) to cool the coolant via a cooling radiator (122) of the high-temperature cooling circuit (100).

10. The method according to claim 8, **characterized in that** if the temperature of the coolant circulating in the low-temperature cooling circuit (200) is lower than the set temperature (TC), said verification step "E5" is repeated.

11. The method according to claim 1, **characterized in that** when the temperature of the coolant in the high-temperature cooling circuit (100) is at least equal to a setpoint temperature (TC) which is equal to the operating limit temperature (TFmax) minus a specified value (β), the method comprises a step "E21" consisting in controlling the cooling system (10) as a function of the temperature of the coolant in the low-temperature cooling circuit (200), the means (302, 306) for regulating the transfer circuit (300) being held in the open position as long as the temperature of the coolant in the low-temperature cooling circuit (200) remains below the operating limit temperature (TFmax).
